Europäisches Patentamt

European Patent Office

Office européen des brevets

(19)

(11) **EP 0 906 586 B1**

(12) **EUROPÄISCHE PATENTSCHRIFT**

(45) Veröffentlichungstag und Bekanntmachung des Hinweises auf die Patenterteilung:
**26.06.2002 Patentblatt 2002/26**

(51) Int Cl.7: **G02B 26/06**, G02B 26/08, G09F 9/37

(21) Anmeldenummer: **97929199.4**

(22) Anmeldetag: **17.06.1997**

(86) Internationale Anmeldenummer:
**PCT/EP97/03149**

(87) Internationale Veröffentlichungsnummer:
**WO 97/49000 (24.12.1997 Gazette 1997/55)**

(54) **PHASENMODULIERENDE MIKROSTRUKTUREN FÜR HÖCHSTINTEGRIERTE FLÄCHENLICHTMODULATOREN**

PHASE-MODULATING MICROSTRUCTURES FOR HIGHLY INTEGRATED SURFACE LIGHT MODULATORS

MICROSTRUCTURES DE MODULATION EN PHASE POUR MODULATEURS DE LUMIERE EN SURFACE HAUTEMENT INTEGRES

(84) Benannte Vertragsstaaten:
**DE FR GB**

(30) Priorität: **18.06.1996 DE 19624276**

(43) Veröffentlichungstag der Anmeldung:
**07.04.1999 Patentblatt 1999/14**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
 • **GOTTFRIED-GOTTFRIED, Ralf**
  **D-01109 Dresden (DE)**
 • **KÜCK, Heinz,Dr.**
  **D-01465 Langebrück (DE)**
 • **KUNZE, Detlef,Dr.**
  **D-01097 Dresden (DE)**

(74) Vertreter: **Schoppe, Fritz, Dipl.-Ing. et al**
**Schoppe, Zimmermann & Stöckeler,**
**Patentanwälte,**
**Postfach 71 08 67**
**81458 München (DE)**

(56) Entgegenhaltungen:
**US-A- 3 001 447**     **US-A- 4 030 813**
**US-A- 4 392 711**     **US-A- 4 660 938**

 • **BRINKER W ET AL: "Deformation Behavior of Thin Viscoelastic Layers used in an Active-Matrix-Addressed Spatial Light Modulator" PROCEEDINGS OF THE SPIE: ELECTR-OPTIC AND MAGNETO-OPTIC MATERIALS, Bd. 1018, 22.September 1988, HAMBURG, DE, Seiten 79-85, XP002042949 in der Anmeldung erwähnt**
 • **YASUSHI HASHINO ET AL: "LIGHT MODULATION BY TRANSVERSE ELECTRIC FIELD INDUCED OIL SURFACE DEFORMATION" APPLIED PHYSICS LETTERS, Bd. 55, Nr. 11, 11.September 1989, Seiten 1056-1058, XP000080475**

**Beschreibung**

Die vorliegende Erfindung bezieht sich auf höchstintegrierte Flächenlichtmodulatoren für Lichtventile und insbesondere auf phasenmodulierende Strukturen für die Phasenmodulation von auf die Strukturen einfallendem Licht.

Flächenlichtmodulatoren, welche für Lichtventile eingesetzt werden, werden seit längerer Zeit in Verbindung mit sogenannten Schlieren-Abbildungssystemen in Projektoranwendungen oder auch bei der Direktbelichtung von Halbleiterwafern verwendet. Dabei werden elektronische Bildinformationen in entsprechende Phasenmodulationen eines Lichtstrahls umgewandelt, welche durch die Flächenlichtmodulatoren erzeugt werden. Das Schlieren-Abbildungssystem wandelt dann die Phasenmodulationen des Lichtstrahls in Lichtintensitätsvariationen an einer Beobachtungsebene um, indem beispielsweise das unmodulierte Licht abgeblockt wird, und das Licht, das auf modulierte Bereiche des Flächenlichtmodulators fällt, durchgelassen wird. Der Modus, bei dem das modulierte Licht zu der Beobachtungsebene gelangt, wird positiver Modus genannt. Ist das Schlieren-Abbildungssystem derart angeordnet, daß lediglich das unmodulierte Licht zu der Beobachtungsebene gelangt und das modulierte Licht abgeblockt wird, arbeitet die gesamte Belichtungsanordnung im sogenannten Negativmodus.

Zum besseren Verständnis des Anwendungsbereichs der vorliegenden Erfindung wird nachfolgend kurz auf ein Schlieren-Abbildungssystem, bei dem ein bekannter Flächenlichtmodulator verwendet wird, eingegangen. Diese bekannte Belichtungsvorrichtung ist in der Wo 91/17483 offenbart.

Eine Lichtquelle, die oft als Laser ausgeführt ist, sendet Licht über eine Strahlaufweitungsoptik und eine Fokussierungsoptik auf eine Balkenspiegelanordnung, welche das Licht durch ein Schlieren-Objektiv hindurch auf einen Flächenlichtmodulator reflektiert. Abhängig davon, ob ein Bildelement des Flächenlichtmodulators angesteuert ist oder nicht, wird Licht, das von dem Flächenlichtmodulator reflektiert wird, entweder durch das Schlieren-Objektiv wieder auf die Balkenspiegelanordnung reflektiert oder das Licht gelangt an derselben vorbei in ein Projektionsobjektiv, welche dieses Licht dann auf eine Beobachtungsebene abbildet. In dieser Beobachtungsebene kann beispielsweise ein zu belichtender Wafer positioniert sein.

Wie bereits oben angemerkt wurde, kann die gesamte Schlieren-Abbildungsanordnung entweder das Licht auf die Beobachtungsebene abbilden, das durch den Flächenlichtmodulator moduliert worden ist, d.h. entsprechend dem Positivmodus, oder die optische Anordnung kann das Licht, das von dem Flächenlichtmodulator nicht moduliert worden ist, auf die Beobachtungsebene abbilden, was dem Negativmodus entspricht, wobei das modulierte Licht von der Beobachtungsebene abgeblockt wird und beispielsweise zurück in die Lichtquelle reflektiert wird.

Bei der Belichtungsvorrichtung, die in der WO 91/17483 beschrieben ist, wird ein Flächenlichtmodulator verwendet, der eine viskoelastische Steuerschicht aufweist, die in Richtung zu dem Schlieren-Objektiv hin von einer reflektierenden Oberfläche abgeschlossen ist, welche beispielsweise ein Metallfilm sein kann. Der Flächenlichtmodulator weist ferner eine sogenannte aktive Adressierungsmatrix aus, die aus einer monolithisch integrierten Anordnung von MOS-Transistoren, welche auch aktive CMOS-Matrix genannt wird, mit zugeordneten Steuerelektrodenpaaren gebildet sein kann. Jedem Bildelement oder oberflächenbereich der reflektierenden Oberfläche des Lichtmodulators sind zwei Transistoren mit einem oder mehreren Elektrodenpaaren zugeordnet, die jeweils ein Diffraktionsgitter mit einer oder mehreren Gitterperioden mit der viskoelastischen Schicht und ihrer reflektierenden Oberfläche bilden.

Wie es in dem Artikel mit dem Titel "Deformation behaviour of thin viscoelastic layers used in an active-matrix-adressed spatial light modulator, SPIE, Bd. 1018, Electro-optic and magneto-optic materials" (1988) beschrieben ist, sind für Verformungsamplituden der viskoelastischen Steuerschicht im Bereich von 0,1 µm Spannungen von mindestens etwa $\pm10$ Volt notwendig. Somit müssen die Transistoren der aktiven Matrix mindestens eine Spitze-zu-Spitze-Spannung von 20 V oder mehr aushalten. Viele herkömmliche MOS-Bauelemente besitzen jedoch eine maximale Betriebsspannung von nur etwa 12 V. Daher ist es nicht möglich, bei derartigen Lichtmodulatoren herkömmliche, preisgünstige CMOS-Bauelemente zu verwenden. stattdessen benötigen bekannte Lichtmodulatoren mit einer viskoelastischen Schicht speziell dotierte Transistoren, damit ausreichende Durchbruchsspannungen erreicht werden können.

Aus dem U.S Patent Nr. 4,728,185 ist ein Flächenlichtmodulator bekannt, dessen reflektierende Oberfläche aus einer Vielzahl von elektrisch adressierbaren, mikromechanischen Hebelbalken besteht.

Die JP-A-4 350 819 offenbart eine Variable-Phase-Platte, die eine Phasendifferenz mit guter Reproduzierbarkeit und guter Steuerbarkeit erzeugt. Die Variable-Phase-Platte umfaßt ein inneres Dielektrikum in Schichtform, das mittels eines elastischen Materials in einem entsprechend großen Loch in einem äußeren Dielektrikum befestigt ist. Beide Hauptoberflächen des inneren Dielektrikums sind mit einer ersten bzw. zweiten Elektrode beschichtet, wobei ebenfalls beide Hauptoberflächen des äußeren Dielektrikums mit einer ersten bzw. einer zweiten Elektrode beschichtet sind. Die Elektroden sind Licht-transmittierende Leiterschichten, an die jeweils ein Potential angelegt werden kann. Wird eine bestimmte Spannungsdifferenz an die Elektroden, die auf den Oberflächen des inneren Dielektrikums angebracht sind, angelegt, so wird die Dicke des inneren Dielektrikums verändert. Wird keine oder eine andere Spannungsdifferenz an die Elektroden, die auf den Oberflächen des äußeren Dielektrikums angebracht sind, angelegt, so wird die Phase von Licht, das durch das innere Dielektrikum läuft, von der Phase des Lichts, das durch das äußere Dielektrikum läuft, abweichen. Das elastische Material, das das innere Dielektrikum mit dem äußeren Dielektrikum verbindet, dient dazu, unterschiedliche Dicken des inneren Dielektrikums und des äußeren Dielektrikums zuzulassen.

Die DE-AS 12 91 416, auf die der Oberbegriff des Patentanspruchs 1 zurückgeht, lehrt einen optischen Phasenmodulator, der eine erste, reflektierende Elektrode aufweist, die auf einem Registrierstreifen aufgebracht ist. Über der ersten Elektrode ist eine piezoelektrische Schicht angeordnet, auf deren von der ersten Elektrode abgewandten Oberfläche eine zweite, transparente Elektrode angebracht ist, die wiederum zur Lichteinfallsrichtung hin von einem durchsichtigen Substrat bedeckt ist. Durch Anlegen einer Spannung an verschiedene Teile der ersten Elektrode mittels des Registrierstreifens werden die Dicken der Teile der piezoelektrischen Schicht entsprechend verändert. Hierdurch hat Licht, das durch einen Teil der piezoelektrischen Schicht, an den eine Spannung angelegt ist, läuft, von der ersten Elektrode reflektiert wird, und wieder durch den einen Teil der piezoelektrischen Schicht zurückläuft, einen Phasenunterschied zu Licht, das durch einen anderen Teil der piezoelektrischen Schicht, an den eine andere Spannung angelegt ist, läuft, von der ersten Elektrode reflektiert wird und wieder durch den anderen Bereich der piezoelektrischen Schicht zurückläuft, da die Dicken der Teile der piezoelektrischen Schicht, an die unterschiedliche Spannungen angelegt sind, unterschiedlich sind.

Das US Patent Nr. 4,660,938 offenbart ein Lichtventil, das ein feines Beugungsgitter aufweist, das auf einer transparenten Elektrode gebildet ist, wobei die Tiefe von Rillen des Beugungsgitters derart ausgelegt ist, daß die optische Weglänge von Licht mit einer gegebenen Wellenlänge, das durch die Räume zwischen den einzelnen Beugungsgitterbalken läuft, sich ungeradzahlig bezüglich der halben Wellenlänge von der optischen Weglänge des Lichts unterscheidet, das durch das Beugungsgitter läuft. Der transparenten Elektrode gegenüberliegend ist eine weitere transparente Elektrode angeordnet, wobei sich in einem Raum zwischen den beiden Elektroden sowohl Luft als auch eine transparente Flüssigkeit befinden. Wird an die zwei Elektroden eine Spannung angelegt, so wird ein elektrisches Feld erzeugt, das die Flüssigkeit in die Räume zwischen den Beugungsgitterbalken zieht, wodurch die optische Weglänge von Licht, das durch diese Räume läuft, verändert wird. Da die anfängliche Differenz der optischen Weglänge zwischen Licht, das durch die Beugungsgitterbalken läuft, und Licht, das durch die Räume zwischen denselben läuft, verändert ist, existiert nicht länger eine Auslöschung benachbarter Lichtstrahlen, wodurch Licht durch die Beugungsgitterstruktur laufen kann. Das Lichtventil wird somit bei keiner angelegten Spannung im wesentlichen kein Licht transmittieren, während bei angelegter Spannung aufgrund der nun abweichend angeordneten Flüssigkeit Licht durch die Struktur transmittiert wird.

Das US Patent Nr. 3,560,955 offenbart ein optisches Element mit einer Schicht aus einem isotropen transparenten Material, das in der Lage ist, eine Doppelbrechung aufzuweisen, wenn es unter eine Belastung gestellt wird. Die Belastung kann durch eine Mehrzahl von belastungserzeugenden Elementen erreicht werden, die im wesentlichen gleichmäßig auf der Schicht verteilt sind, wobei die belastungserzeugenden Elemente elektrostriktive und magnetostriktive Materialien aufweisen können und wirksam mit einer Einrichtung verbunden sind, um vorbestimmte Mengen an Belastungen an die Schicht steuerbar anzulegen. Das transparente isotrope Material, das unter einer Belastung eine Doppelbrechungseigenschaft aufweist, ist zwischen einem Polarisationssieb und einem Analysiersieb angeordnet Ebenfalls zwischen dem Polarisationssieb und dem Analysiersieb sowie an das isotrope Material angrenzend ist ein elektrostriktiver Wandlerbalken 18 angeordnet, von dem zwei Seiten mit einer Stromleitenden dünnen Metallbeschichtung beschichtet sind, welche Elektroden bilden, an die eine Spannung angelegt werden kann, um den elektrostriktiven Wandlerbalken zu verformen, um eine Belastung auf das isotrope Material ausüben zu können, damit dasselbe doppelbrechend wird. Wenn das isotrope Material doppelbrechend wird, kann die Farbe von Licht, das durch das, Analysiersieb transmittiert wird, verändert werden.

Die GB 15 96 649 lehrt eine Einrichtung zur optischen Phasenmodulation. Diese Einrichtung umfaßt einen Quarzkristall, der zwei Licht-transmittierende Endabschnitte aufweist, durch die Lichtstrahlen laufen. Auf dem Quarzkristall befinden sich zwei Paare von Elektroden neben den Endabschnitten desselben. Werden an den Elektroden geeignete Spannungen angelegt, so wird eine Schwingung des Quarzkristalls erreicht, wobei derselbe gebogen wird, um Lichtstrahlen, die durch seine Enden laufen, einer Phasenmodulation zu unterziehen.

Die US 3 001 447 A offenbart eine Bildreproduktionsvorrichtung für sichtbare und unsichtbare Strahlungsbilder, bei der eine dielektrische Flüssigkeit auf einer Spiegelschicht angeordnet ist. Zwischen der Spiegelschicht und einer nicht photoelektrischen Halbleiterschicht sind erste Elektroden angeordnet. Die nicht photoelektrische Halbleiterschicht ist auf einem transparenten Substrat angeordnet, in das sich senkrecht zu der Hauptebene des Bauelements zweite Elektroden erstrecken. Die zweiten Elektroden weisen eine photoleitende Beschichtung auf, was dazu führt, daß dieselben im wesentlichen nicht leitend sind, wenn sie nicht bestrahlt werden, daß dieselben jedoch leitend werden, wenn sie durch ein durch das transparente Substrat einfallendes Licht bestrahlt werden. Wenn eine Zelle des Bildreproduktionsgeräts durch das Substrat hindurch bestrahlt wird, führt die nun leitfähige zweite Elektrode dazu, daß ein elektrisches Feld in dem Flüssigdielektrikum entsteht, was zu einer Aufwellung des Flüssigdielektrikums führt. Durch diese Aufwellung wird ein auf das Flüssigdielektrikum fallendes Licht, nachdem es durch das Flüssigdielektrikum auf die Spiegelschicht eingefallen und von dort reflektiert worden ist, phasenmoduliert. Die Phasenmodulation für jede einzelne Zelle wird bei dem in Dokument D1 offenbarten Bildreproduktionsgerät durch das durch das transparente Substrat einfallende zu reproduzierende Licht bewirkt. Die an die Elektroden angelegte Spannung ist immer die gleiche. Die Änderung eines elektrischen Feldes im Flüssigdielektrikum wird also nicht durch die angelegte Spannung bewirkt, sondern durch ein einfallendes Licht, das die angelegte Spannung durch "Leitfähig-machen" der zweiten Elektrode direkt unter die nicht photoelektrische Halbleiterschicht "transportiert".

Die Aufgabe der vorliegenden Erfindung besteht darin, andere phasenmodulierende Strukturen für die Phasenmodulation von Licht und aus denselben zusammengesetzte Flächenlichtmodulatoren zu schaffen.

Diese Aufgabe wird durch eine phasenmodulierende Struktur gemäß Anspruch 1 und durch einen Flächenlichtmodulator gemäß Anspruch 12 gelöst.

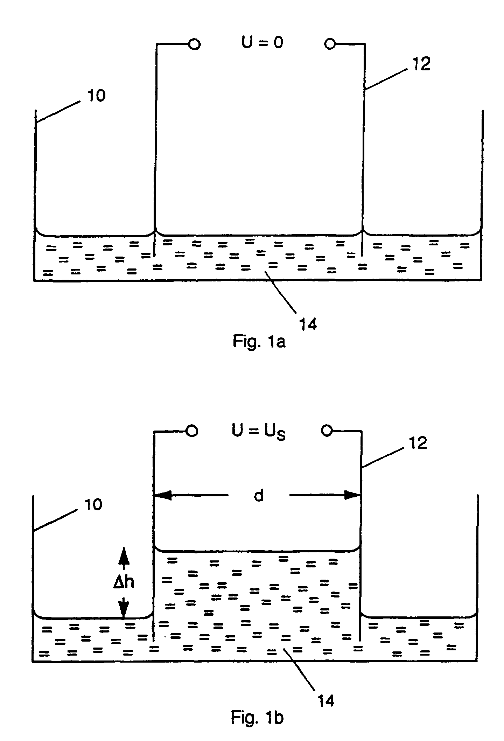

Die Erfindung verwendet den Effekt, daß ein Dielektrikum in das Feldgebiet einer spannungsbeaufschlagten Kondensatoranordnung gezogen wird, bis die Kapazität maximiert ist, bzw. bis das Luftvolumen des Kondensators mit dem Dielektrikum gefüllt ist, wie es nachfolgend bezugnehmend auf die Fig. 1a und 1b detaillierter beschrieben wird.

Besonders durch die Verwendung eines flüssigen Dielektrikums auf einem Spiegel ist es möglich, mit kleinen Spannungen ausreichende Phasenmodulationen eines auf die phasenmodulierende Struktur gemäß der Erfindung einfallenden Lichts zu erzeugen, wodurch es möglich wird, den Flächenlichtmodulator, der die erfindungsgemäßen phasenmodulierenden Strukturen verwendet, mit Hilfe einer aktiven CMOS-Matrix anzusteuern. CMOS-Bauelemente sind preisgünstig, weisen einen sehr niedrigen Leistungsverbrauch auf und sind höchstintegriert herstellbar.

Ein weiterer Vorteil der Erfindung besteht darin, daß die zum Erzeugen einer bestimmten Phasenmodulation erforderlichen Spannungen mit kleiner werdenden Strukturen ebenfalls abnehmen, weswegen beispielsweise thermische Verlustleistungen bei höchstintegrierten Lichtventilen gemäß der vorliegenden Erfindung klein sind, und weswegen bei kleineren Strukturen gleichzeitig auch kleinere Transistoren für die Steuerung der kleineren Spannungen verwendet werden können. Das heißt, daß die erfindungsgemäßen Strukturen ein gutartiges Skalierverhalten aufweisen.

Ferner ermöglichen phasenmodulierende Strukturen gemäß der vorliegenden Erfindung in Verbindung mit einer aktiven CMOS-Matrix eine weitreichende Miniaturisierung des Flächenlichtmodulators, wodurch kleinste Bildelementflächen bei gleichzeitig extrem großen Bildelementzahlen ($10^6$-$10^9$) möglich sind. Die zu erreichenden Phasenmodulationen des Lichts durch die Bildelemente liegen vorzugsweise im Bereich von Null bis $\pi$, wobei jedoch auch größere Phasenmodulationen möglich sind.

Die Miniaturisierung der Flächenlichtmodulatoren ist insbesondere darin vorteilhaft, daß beispielsweise bei der Direktbelichtung von Halbleiterwafern auf aufwendige und verlustreiche, stark verkleinernde optische Anordnungen verzichtet werden kann, da die Abmessungen der erreichbaren Flächenlichtmodulatoren bereits in die Größenordnungen beispielsweise eines zu belichtenden Wafers gebracht werden können.

Bevorzugte Ausführungsbeispiele der vorliegenden Erfindung werden nachfolgend bezugnehmend auf die beiliegenden Zeichnungen detaillierter erläutert. Es zeigen:

Fig. 1a und 1b eine graphische Darstellung des Effekts, der der phasenmodulierenden Struktur gemäß der vorliegenden Erfindung zugrundeliegt;

Fig. 2 eine Darstellung des Zustandekommens der Phasenmodulation des Lichts bei senkrechtem Lichteinfall;

Fig. 3 eine Draufsicht eines Arrays von phasenmodulierenden Strukturen gemäß einem ersten Ausführungsbeispiel der vorliegenden Erfindung;

Fig. 4 eine Schnittansicht des Arrays von phasenmodulierenden Strukturen aus Fig. 3;

Fig. 5 eine Draufsicht eines Arrays von phasenmodulierenden Strukturen gemäß einem zweiten Ausführungsbeispiel der vorliegenden Erfindung;

Fig. 6 eine Schnittansicht des Arrays von phasenmodulierenden Strukturen aus Fig. 5;

Fig. 7a und 7b eine schematische Darstellung der Wirkungsweise des Arrays von phasenmodulierenden Strukturen aus Fig. 5;

Fig. 8 eine schematische Darstellung der Wirkung einer Korrekturlinsenanordnung, die über dem Array von phasenmodulierenden Strukturen angebracht ist;

Fig. 9 eine Draufsicht eines Arrays von phasenmodulierenden Strukturen gemäß einem dritten Ausführungsbeispiel der vorliegenden Erfindung;

Fig. 10      einen Querschnitt des Arrays von phasenmodulierenden Strukturen von Fig. 9;

Fig. 11      eine Draufsicht eines Arrays von phasenmodulierenden Strukturen gemäß einem vierten Ausführungsbeispiel der vorliegenden Erfindung;

Fig. 12a      eine Schnittansicht des Arrays von Fig. 11; und

Fig. 12b      eine weitere Schnittansicht des Arrays von Fig. 11.

Die vorliegende Erfindung basiert auf dem Effekt, daß ein Dielektrikum in das Feldgebiet einer Kondensatoranordnung angezogen wird, bis die Kapazität maximiert ist, bzw. bis das Luftvolumen des Kondensators mit dem Dielektrikum so weit als möglich gefüllt ist. Dies sei anhand der einfachen Anordnung in den Fig. 1a und 1b erläutert.

In den Fig. 1a und 1b befinden sich ein Gefäß 10 und ein Plattenkondensator 12. Der Abstand der beiden Platten des Plattenkondensators ist mit d bezeichnet. In Fig. 1a ist keine Spannung an dem Plattenkondensator angelegt (U = 0). Ein in dem Gefäß vorhandenes flüssiges Dielektrikum 14 weist zwischen den Platten des Plattenkondensators und außerhalb der Platten des Plattenkondensators denselben Flüssigkeitspegel auf. Lediglich direkt an den beiden Platten des Plattenkondensators sowie an der Gefäßwand ist der Pegel des flüssigen Dielektrikums 14 aufgrund der Oberflächenspannung und der Kapillarität der Flüssigkeit etwas erhöht.

Wird nun eine Steuerspannung $U_S$ an die Elektroden des Plattenkondensators 12 angelegt, so steigt aufgrund des erwähnten Effektes der Flüssigkeitspegel zwischen den Kondensatorplatten gegen die Schwerkraft über den durch die Kapillarität gegebenen Pegel (Fig. 1a) an. Der Unterschied des Flüssigkeitspegels zwischen dem Fall, bei dem die angelegte Spannung 0 ist, und dem Fall, bei dem die angelegte Spannung $U_S$ ist, ist mit $\Delta h$ bezeichnet. Es sei angemerkt, daß dieser Effekt nicht nur bei einem flüssigen Dielektrikum auftritt, sondern daß das Dielektrikum beispielsweise auch ein Festkörper oder ein Gas sein kann.

Folgendes Beispiel soll anhand von Zahlenwerten einen Eindruck über die vorhandenen Größenordnungen vermitteln. Verwendet man beispielsweise als geeignetes flüssiges Dielektrikum 14 Siliconöl, das eine Dichte von etwa 1 g/cm$^3$ und eine Dielektrizitätskonstante $\in_r$ von etwa 2,5 aufweist, so steigt der Flüssigkeitspegel zwischen den Kondensatorplatten um etwa 1 μm, wenn der Plattenabstand des Plattenkondensators 25 μm beträgt, und an die Platten des Plattenkondensators eine Spannung von 1 V angelegt wird. Allgemein ausgedrückt ist der Flüssigkeitspegelunterschied proportional zu $U^2/d^2$, wobei d der Plattenabstand und U die Spannung an dem Plattenkondensator ist.

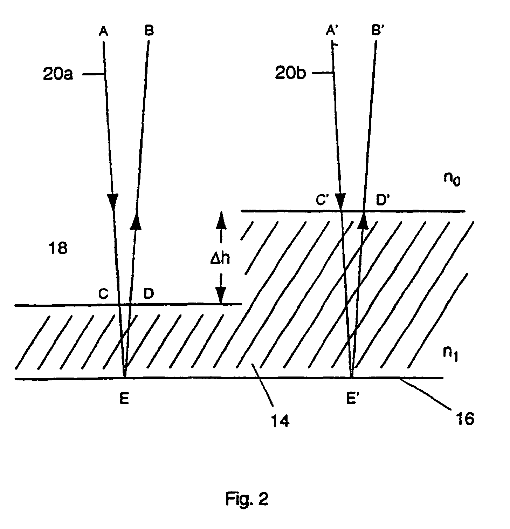

Fig. 2 zeigt das Zustandekommen einer Phasenmodulation von Licht aufgrund einer Pegeländerung des flüssigen Dielektrikums 14. In Fig. 2 befindet sich unter dem flüssigen Dielektrikum 14 mit dem Brechungsindex $n_1$ ein Spiegel 16. Über dem flüssigen Dielektrikum 14 befindet sich ein anderes Dielektrikum 18 mit dem Brechungsindex $n_0$, das beispielsweise Luft sein kann. Die linke Hälfte der Fig. 2 entspricht Fig. 1a, d.h. es existiert in dem flüssigen Dielektrikum 14 kein elektrisches Feld. Die rechte Hälfte von Fig. 2 entspricht Fig. 1b, d.h. der Pegel des flüssigen Dielektrikums 14 ist aufgrund eines in dem flüssigen Dielektrikum 14 vorhandenen elektrischen Feldes erhöht.

Es werden zwei näherungsweise senkrecht einfallende Lichtstrahlen 20a bzw. 20b verglichen, die sich in Bereichen mit unterschiedlichen Flüssigkeitspegeln ausbreiten, wobei sie an dem Spiegel 16 in einem Punkt E bzw. E' reflektiert werden und dann wieder durch die Dielektrika mit den Brechzahlen $n_1$ und $n_0$ zurücklaufen. Die beiden Strahlen legen auf dem Weg von A nach B bzw. von A' nach B' aufgrund des Pegelunterschiedes $\Delta h$ unterschiedliche optische Wege zurück. Dieser Unterschied der optischen Wege manifestiert sich in einem Phasenunterschied der beiden Lichtstrahlen 20a und 20b von:

$$\Delta\Phi = 4\pi \cdot (n_0\text{-}n_1) \cdot \Delta h/\lambda$$

$\lambda$ stellt in dieser Gleichung die Wellenlänge des einfallenden Lichts dar. Bei einer Flüssigkeit mit $n_1$ = 1,4 (beispielsweise Siliconöl) wird für eine Phasenmodulation von $\pi$, d.h. $\lambda/2$, ein Pegelunterschied von $\Delta h$ = $\lambda/1,6$ benötigt. Anders ausgedrückt verlängert ein in dem flüssigen Dielektrikum 14 vorhandenes elektrisches Feld den optischen Weg eines Lichtstrahls aufgrund des oben beschriebenen Effekts. Damit ist es möglich, mit einer Anordnung gemäß Fig. 1a und 1b die Phase von einfallendem Licht als Reaktion auf eine elektrische Spannung zu modulieren.

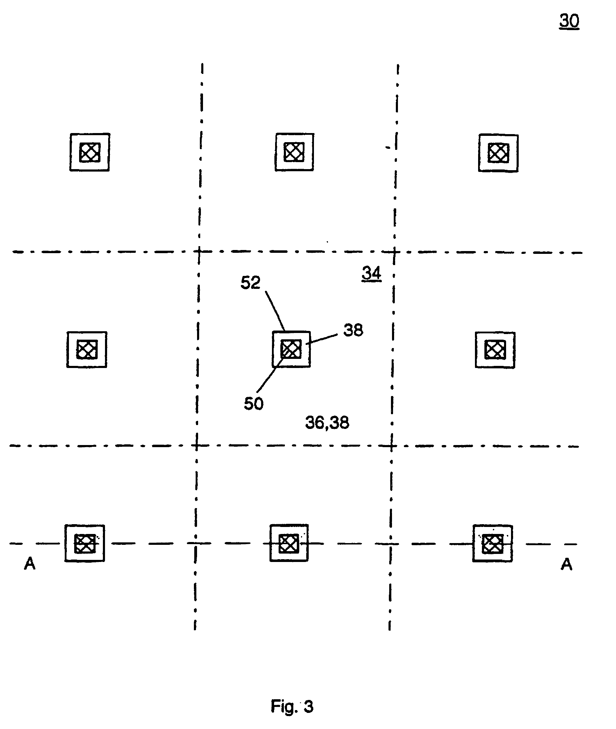

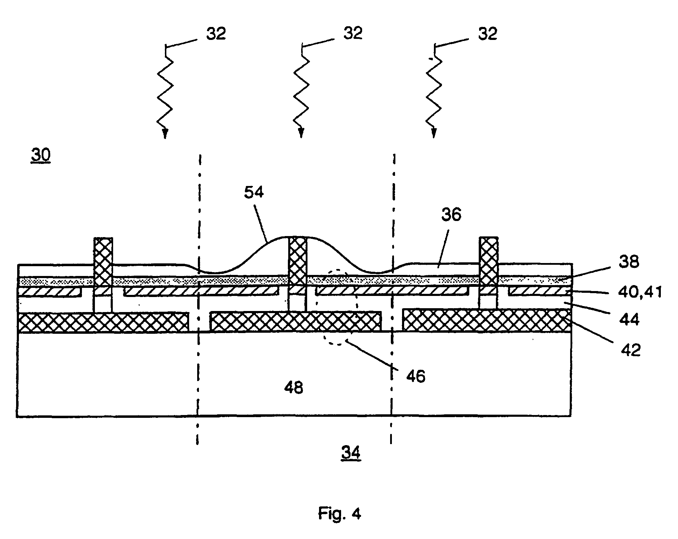

In Fig. 3 ist ein Flächenlichtmodulator 30 gemäß einem ersten Ausführungsbeispiel der vorliegenden Erfindung in der Draufsicht dargestellt, während Fig. 4 diesen Flächenlichtmodulator 30 im Querschnitt entlang der Linie A-A in Fig. 3 darstellt. Der Ausdruck "Draufsicht" bzw. der Ausdruck "oben" beziehen sich in dieser Anmeldung lediglich auf die Richtung, aus der Licht auf einen Flächenlichtmodulator 30 einfällt. Bei der Draufsicht in Fig. 3 fällt das Licht demnach von oben auf die Zeichenebene. Die obere Seite der Struktur 30 ist die Seite, auf die das einfallende Licht 32 auftrifft.

Wie in Fig. 3 und Fig. 4, die ein Querschnitt entlang der Linie A-A von Fig. 3 ist, zu sehen ist, besteht der Flächenlichtmodulator 30 aus einer Mehrzahl von phasenmodulierenden Strukturen 34, die jeweils einzelne Bildelemente des Flächenlichtmodulators 30 definieren. Die Umrisse der einzelnen phasenmodulierenden Strukturen 34 sind in Fig. 3 schematisch durch die strichpunktierten Linien angedeutet. Diese strichpunktierten Linien haben für die Konstruktion des Flächenlichtmodulators 30 keine Relevanz, sie dienen lediglich zur Veranschaulichung der phasenmodulierenden Strukturen 34.

Anhand von Fig. 4 ist nachfolgend eine einzelne phasenmodulierende Struktur 34 beschrieben. Das einfallende Licht 32 trifft zuerst auf ein flüssiges Dielektrikum 36 auf. Dieses flüssige Dielektrikum 36 befindet sich auf einer dünnen dielektrischen Schicht 38, die sich auf einem Spiegel 40 befindet. Bei diesem Ausführungsbeispiel der vorliegenden Erfindung sind der Spiegel 40 sowie eine Elektrode 41, die auch als Spiegelelektrode bezeichnet wird, einstückig ausgeführt, wobei der Spiegel 40 durch eine geeignete Oberfläche der Elektrode 41 realisiert ist. Der Spiegel 40 und die Elektrode 41 können jedoch auch getrennte Elemente sein.

Zwischen der Spiegelelektrode 41 und einer metallischen Elektrode 42, welche auch als Steuerelektrode bezeichnet wird, befindet sich ein festes Dielektrikum 44, wobei die Steuerelektrode 42, die Spiegelelektrode 41 und das feste Dielektrikum 44 eine Pufferkapazität 46 bilden, deren Kapazitätsbelag über die Dicke und die Dielektrizitätskonstante des festen Dielektrikums 44 eingestellt werden kann.

Die Steuerelektrode 42 befindet sich auf einem Substrat 48, das beispielsweise als CMOS-Aktivmatrix ausgeführt sein kann, und das in der Lage ist, die Steuerelektroden 42 des Flächenlichtmodulators 30, der durch ein Array von phasenmodulierenden Strukturen 34 gebildet ist, mit den nötigen Steuerspannungen wahlfrei und mit ausreichender Auflösung anzusteuern.

Auf der im wesentlichen quadratischen Steuerelektrode, deren Kanten etwas neben den strichpunktierten Linien der phasenmodulierenden Struktur 34 (Fig. 3) verlaufen, befindet sich in der Mitte ein Stift 50 aus Wolfram oder einem anderen geeigneten elektrisch leitenden Material oder aus einer Kombination der Materialien. Der Stift 50 erstreckt sich durch ein Loch 52 in der Spiegelelektrode 41 und dem Spiegel 40. Das Loch 52 ist in Fig. 3 im wesentlichen quadratisch dargestellt, wobei es jedoch offensichtlich ist, daß sie auch kreisförmig sein kann oder jede andere geeignete Form annehmen kann. Der sich durch das Loch 52 erstreckende Stift 50, der mit der Steuerelektrode 42 in elektrisch leitender Verbindung ist, ist von der Spiegelelektrode 41 durch das feste Dielektrikum 44 und die dünne, dielektrische Schicht 38 elektrisch isoliert.

Durch das planarisierte Dielektrikum 44 und die darauf abgeschiedene Metallschicht, die die Spiegelelektrode 41 bildet, ist eine Spiegelebene mit hoher Planarität und guter Reflektivität realisiert. Wie bereits angemerkt wurde, isoliert die dünne dielektrische Schicht 38 die Steuerelektrode 42, d.h. den Stift 50, von der Spiegelelektrode 41 und dieselbe sorgt beispielsweise für eine gute Benetzung der Fläche der Spiegelelektrode 40 gegenüber der Steuerelektrode 42 und für eine chemischen Trennung des Spiegels von dem flüssigen Dielektrikum, um die Korrosionsfestigkeit der Anordnung zu verbessern. Die Steuerelektrode 42 kann ebenfalls mit einem Dielektrikum überzogen sein.

Das flüssige Dielektrikum 36 befindet sich im Raum oberhalb der dünnen dielektrischen Schicht 38. Über die Oberflächenspannung des flüssigen Dielektrikums 36, dessen Dichte und dessen Benetzungseigenschaften mit dem System, das aus dem Spiegel 40, der Spiegelelektrode 41, der dünnen dielektrischen Schicht 38 und der Steuerelektrode 42, d.h. dem Stift 50, gebildet ist, und einer eventuellen Passivierung kann die Form des Oberflächenprofils des flüssigen Dielektrikums 36 eingestellt bzw. optimiert werden. Der optisch ideale Zustand des flüssigen Dielektrikums ist durch eine gleichmäßige Bedeckung der Fläche des Spiegels 40 durch eine homogenen Pegel des flüssigen Dielektrikums 36 gekennzeichnet, falls an der phasenmodulierenden Struktur 34 keine Spannung angelegt ist. Die dielektrische Schicht 38 ist grundsätzlich nicht für die Funktion und Isolation erforderlich. Sie kann jedoch vorteilhaft genutzt werden, um die Benetzung mit der Flüssigkeit und damit die Oberfläche des Flüssigkeitsfilms zu optimieren.

Nachfolgend wird die Funktionsweise des Flächenlichtmodulators 30 gemäß einem ersten Ausführungsbeispiel der vorliegenden Erfindung anhand der Funktionsweise der phasenmodulierenden Struktur 34 detaillierter erläutert. Die Spiegelelektrode 41 liegt vorzugsweise auf einem festen Potential, wie z.B. dem Massepotential. Wird nun an die Steuerelektrode 42 mittels der CMOS-Aktiv-Matrix, die das Substrat 48 der phasenmodulierenden Struktur 34 bildet, eine Spannung $U_S$ angelegt, so wird das flüssige Dielektrikum 36 in den mit Luft gefüllten Feldbereich der aus der Steuerelektrode 42, d.h. dem Stift 50, und der Spiegelelektrode 41 gebildeten Kapazität gezogen.

Fig. 4 zeigt die phasenmodulierende Struktur 34 in dem angesteuerten Zustand, d.h. bei einer an der Steuerelektrode 42 angelegten Spannung $U_S$. Im Gegensatz zu dem Flüssigkeitsprofil der beiden phasenmodulierenden Strukturen, die in Fig. 4 ganz links und ganz rechts im nicht-angesteuerten Zustand dargestellt sind, weist die phasenmodulierende Struktur 34 ein verändertes Flüssigkeitsprofil 54 auf. Das flüssige Dielektrikum 36 lagert sich an dem Stift 50 an, wodurch das Flüssigkeitsprofil 54 weiter entfernt von dem Stift 50 eine Reduktion des Flüssigkeitspegels im Vergleich zum nicht-angesteuerten Zustands aufweist. Es sei angemerkt, daß alle einzelnen phasenmodulierenden Strukturen unabhängig voneinander angesteuert werden können, weswegen die einzelnen Betriebsparameter, wie z.B. der Pegel des flüssigen Dielektrikums 36 und die Fläche einer phasenmodulierenden Struktur, derart gewählt werden können, daß sich benachbarte phasenmodulierende Strukturen im wesentlichen nicht beeinflussen.

Das auf die angesteuerte phasenmodulierende Struktur 34 einfallende Licht 32 erhält aufgrund der Pegeldifferenz des flüssigen Dielektrikums bzw. aufgrund des Flüssigkeitsprofils 54 einer angesteuerten Struktur eine Phasenverschiebung bezüglich des Lichts, das auf eine nicht-angesteuerte phasenmodulierende Struktur einfällt. Beim Abschalten der an die Steuerelektrode 42 angelegten Spannung $U_S$, d.h. beim Entladen der Kapazität, stellt sich das flüssige Dielektrikum 36 unter dem Einfluß der Schwerkraft zurück, wodurch wieder ein im wesentlichen ebenes Flüssigkeitsprofil hergestellt ist.

Das in den Fig. 3 und 4 gezeigte Ausführungsbeispiel der vorliegenden Erfindung zeichnet sich durch einen hohen optischen Füllgrad aus. Der Füllgrad gibt das Verhältnis der optisch aktiven Fläche eines Bildelements zur Gesamtfläche desselben wieder. In diesem Zusammenhang sei darauf hingewiesen, daß Fig. 3 und Fig. 4 nicht maßstabsgerecht gezeichnet sind, sondern daß die Löcher 52 durch die Spiegelelektrode im Vergleich zur Größe eines Bildelements wesentlich vergrößert dargestellt sind. Bei einem bevorzugten Ausführungsbeispiel betragen die Fläche eines Bildelements 10 x 10 $\mu m^2$, der Durchmesser des Stifts 50 0,8 $\mu m$ und der Durchmesser des kreisförmigen Lochs 52 1,6 $\mu m$. Bei diesem Ausführungsbeispiel der vorliegenden Erfindung ergibt sich beispielsweise ein Füllgrad von 98%. Bei einem anderen Ausführungsbeispiel der vorliegenden Erfindung mit einer kleineren Bildfläche von 3 x 3 $\mu m^2$, einem Durchmesser des Stifts 50 von 0,5 $\mu m$ und einem Durchmesser des Lochs 52 von 1,6 $\mu m$ ergibt sich ein optischer Füllgrad von 89%.

Bezugnehmend auf Fig. 3, die den Flächenlichtmodulator 30 gemäß einem ersten bevorzugten Ausführungsbeispiel der vorliegenden Erfindung in der Draufsicht darstellt, sei angemerkt, daß der Spiegel 40 und die Spiegelelektrode 41 bei dem gesamten Flächenlichtmodulator abgesehen von den einzelnen Löchern 52 durchgehend ausgeführt sind. Ferner ist die gesamte Struktur des Flächenlichtmodulators 30, d.h. die mit der dünnen dielektrischen Schicht 38 beschichtete Spiegelelektrode 41, von dem flüssigen Dielektrikum 36 durchgehend bedeckt, wobei lediglich die Stifte 50 gewissermaßen als "Inseln" aus der im wesentlichen ebenen Oberfläche des flüssigen Dielektrikums 36 vorstehen, wenn der Flächenlichtmodulator 30 nicht angesteuert ist.

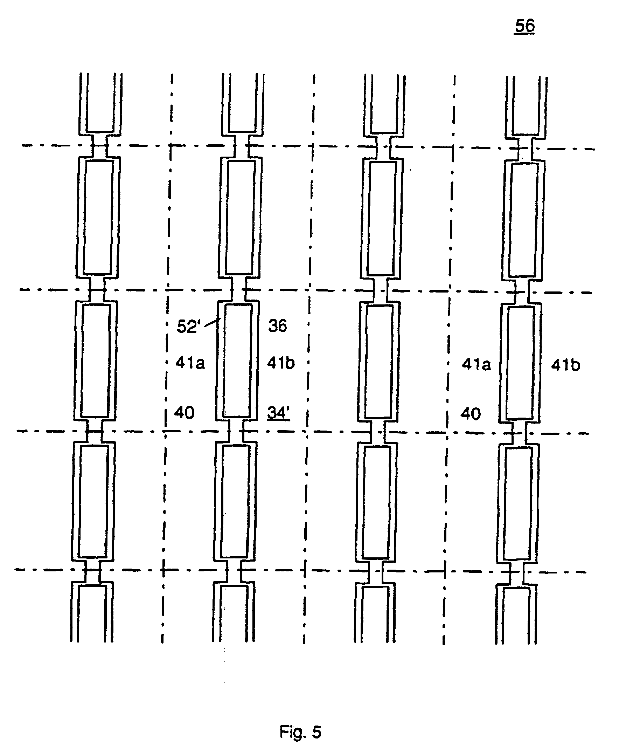

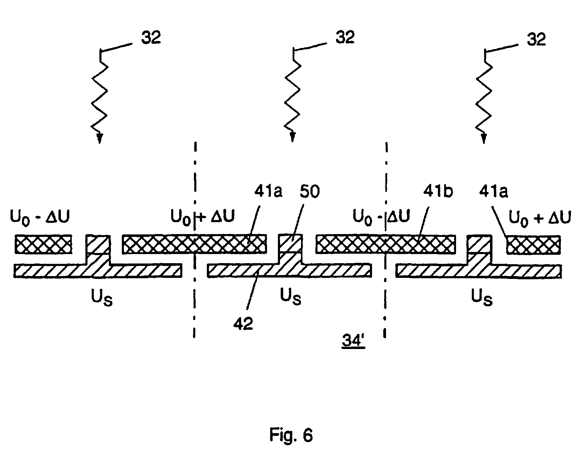

Fig. 5 zeigt ein zweites Ausführungsbeispiel der vorliegenden Erfindung in der Draufsicht, während Fig. 6 das zweite Ausführungsbeispiel der vorliegenden Erfindung im Querschnitt darstellt. Das zweite bevorzugte Ausführungsbeispiel der vorliegenden Erfindung ist dem ersten bevorzugten Ausführungsbeispiel der vorliegenden Erfindung, das in den Fig. 3 und 4 dargestellt ist, ähnlich, wobei jedoch, wie es besonders in Fig. 6 zu sehen ist, die dünne dielektrische Schicht 38 und das feste Dielektrikum 44 nicht vorhanden sind. Ferner stehen die Stifte 50 nicht über die durch Spiegelelektrodenstreifen 41a, 41b gebildete Ebene hinaus, sondern sind mit derselben im wesentlichen bündig. Wie es bei der Beschreibung des ersten Ausführungsbeispiels bereits angemerkt wurde, ist auch bei diesem Ausführungsbeispiel der Spiegel 40 durch die Oberfläche der Spiegelelektrodenstreifen 41a, 41b realisiert. Der Spiegel 40 kann jedoch auch von den Spiegelelektrodenstreifen 41a, 41b getrennt ausgeführt sein. Das Substrat 48 sowie das flüssige Dielektrikum 36, das sich bei dem zweiten Ausführungsbeispiel der vorliegenden Erfindung auch in die Zwischenräume zwischen der Spiegelelektrode 40 und der Steuerelektrode 42 hinein erstreckt, sind in Fig. 6 lediglich aus Darstellungsgründen weggelassen. Es sei angemerkt, daß sowohl das erste Ausführungsbeispiel der vorliegenden Erfindung ohne die dünne dielektrische Schicht 38, das feste Dielektrikum 44 und mit bündigen Stiften 50, als auch das zweite Ausführungsbeispiel der vorliegenden Erfindung mit der dünnen dielektrischen Schicht 38, mit dem festen Dielektrikum 44 und vorstehenden Stiften 50 ausgeführt sein können.

In Analogie zu Fig. 3 sind bei dem Flächenlichtmodulator 56 gemäß dem zweiten Ausführungsbeispiel der vorliegenden Erfindung wieder die einzelnen phasenmodulierenden Strukturen 34' durch strichpunktierte Linien untereinander abgegrenzt. Ein Quadrat, das durch jeweilige strichpunktierte Linien definiert ist, bildet ein Bildelement. Für Fachleute ist es offensichtlich, daß die einzelnen Bildelemente, d.h. die phasenmodulierenden Strukturen, nicht notwendigerweise quadratisch sein müssen, sondern daß sie jede andere gewünschte Form annehmen können.

Im Unterschied zu Fig. 3 sind längliche Löcher 52' vorhanden, die sich in einer Richtung der phasenmodulierenden Struktur 34' länglich erstrecken, wobei sie jedoch kurz vor Beginn des nächsten Bildelements begrenzt sind. Im Gegensatz zum ersten Ausführungsbeispiel der vorliegenden Erfindung ist jedoch das Loch 52' mit dem Loch 52' der benachbarten phasenmodulierenden Struktur verbunden, wie es in Fig. 5 zu sehen ist. Dies führt dazu, daß die Spiegelelektrode 41, die in Fig. 3 durchgehend ausgeführt ist, in Fig. 5 nicht mehr durchgehend ausgeführt ist, sondern daß die Spiegelelektrodenstreifen 41a, 41b entstehen, wobei der Spiegelelektrodenstreifen 41a, der sich bezüglich Fig. 5 auf der linken Seite des Lochs 52' befindet, von dem Spiegelelektrodenstreifen 41b, der sich auf der rechten Seite des Lochs 52' befindet, elektrisch isoliert ist. Der Spiegel 40 (Fig. 5) ist aus Übersichtlichkeitsgründen in den Fig. 6 bis 8 nicht extra durch sein Bezugszeichen markiert, da er durch die Oberfläche der Spiegelelektrodenstreifen 41a und 41b realisiert ist.

Die elektronische Ansteuerung des zweiten Ausführungsbeispiels der vorliegenden Erfindung findet ähnlich zu der elektronischen Ansteuerung des ersten Ausführungsbeispiels der vorliegenden Erfindung statt. Da nun jedoch die beiden Spiegelelektrodenstreifen 41a, 41b voneinander elektrisch isoliert sind, werden sie jeweils mit einer unterschiedlichen fest eingestellten oder steuerbaren Spannung $U_0 + \Delta U$ bzw. $U_0 - \Delta U$ beaufschlagt. Bei dem Beispiel in Fig. 4 ist der Spiegelelektrodenstreifen 41a mit der Spannung $U_0 + \Delta U$ beaufschlagt, während der Spiegelelektrodenstreifen 41b mit der Spannung $U_0 - \Delta U$ beaufschlagt ist. Es ist jedoch offensichtlich, daß die Spiegelelektrodenstreifen 41a, 41b auch mit den entgegengesetzten Spannungen beaufschlagt werden können. Die an der Steuerelektrode 42, die mit dem Stift 50, der mit der Ebene der Spiegelelektrodenstreifen bündig ist, angelegte Spannung ist mit $U_S$ bezeichnet. Für Fachleute ist es offensichtlich, daß der Stift 50 mit der Steuerelektrode 42 einstückig ausgeführt sein kann. Die Spannung $U_S$, die an die Steuerelektrode 42 angelegt wird, weist einen Pegel auf, der zwischen den Spannungspegeln der Spiegelelektrodenstreifen 41a, 41b liegt. Die Steuerelektrode 42 kann demnach mit dem Spannungshub $2\Delta U$ angesteuert werden.

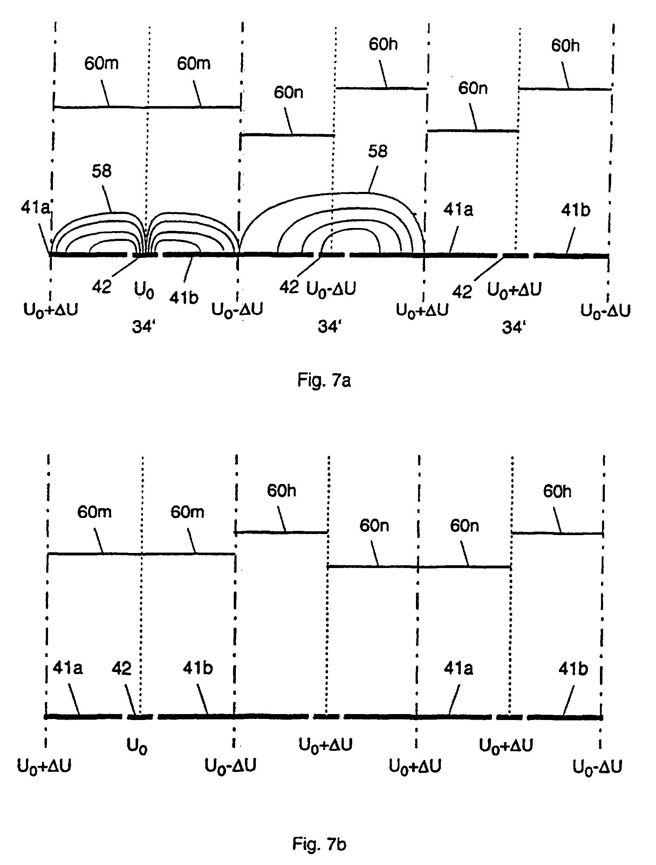

Die Wirkungsweise eines Bildelements gemäß dem zweiten Ausführungsbeispiel der vorliegenden Erfindung ist in den Fig. 7a und 7b dargestellt. In den Fig. 7a und 7b sind mehrere benachbarte phasenmodulierende Strukturen 34' schematisch dargestellt. Die an den Spiegelelektrodenstreifen 41a, 41b anliegenden Potentiale $U_0 + \Delta U$ bzw. $U_0 - \Delta U$ und die an die Steuerelektroden angelegten Steuerungsspannungen $U_0$, $U_0 - \Delta U$ bzw. $U_0 + \Delta U$ sind im unteren Bereich von Fig. 7a und 7b notiert. Es können grundsätzlich alle Spannungen zwischen $U_0 - \Delta U$ und $U_0 + \Delta U$ an die Elektroden 42 wahlfrei angelegt werden. Die einzelnen phasenmodulierenden Strukturen 34', die jeweils ein Bildelement darstellen, sind wieder durch strichpunktierte Linien definiert. In Fig. 7a sind bei den beiden linken phasenmodulierenden Strukturen 34' elektrische Feldlinien 58 eingezeichnet, die bei den notierten Spannungsverhältnissen auftreten.

Bei der phasenmodulierenden Struktur 34' ganz links in Fig. 7a befinden sich alle drei Elektroden 41a, 42, 41b auf unterschiedlichen Potentialen, wobei das Potential der Steuerelektrode 42 zwischen den Potentialen der beiden Spiegelelektrodenstreifen 41a, 41b liegt. Die Spannungsdifferenz von der Steuerelektrode 42 zu den beiden Spiegelelektrodenstreifen 41a, 41b beträgt jeweils $\Delta U$. Über den Elektroden der phasenmodulierenden Struktur 34' ganz links in Fig. 7a ist der sich ergebende Flüssigkeitspegel schematisch gezeichnet. Da die Spannungsdifferenz auf beiden Seiten der Steuerelektrode 42 $\Delta U$ beträgt, ergibt sich ein mittlerer Flüssigkeitspegel 60m in diesem Bildelement. Für Fachleute ist es offensichtlich, daß die Darstellung der Flüssigkeitspegel schematisch ist. In der Realität gehen die abrupt gezeichneten Flüssigkeitsübergänge von einem Pegel zum nächsten kontinuierlich ineinander über.

Bei der phasenmodulierenden Struktur 34', die in der Mitte von Fig. 7a rechts neben der gerade beschriebenen phasenmodulierenden Struktur 34' angeordnet ist, ist zwischen dem Spiegelelektrodenstreifen 41b und der Steuerelektrode 42 keine Spannungsdifferenz vorhanden, da sich beide auf dem gleichen Potential $U_0 - \Delta U$ befinden. Da jedoch zwischen dem Spiegelelektrodenstreifen 41a und der Steuerelektrode 42 eine Spannungsdifferenz von $2\Delta U$ auftritt, laufen alle elektrischen Feldlinien 58 in der linken Hälfte der Spiegelelektrode 41a ein, was zu einem hohen Flüssigkeitspegel 60h in dem Bereich zwischen der Steuerelektrode 42 und dem Spiegelelektrodenstreifen 41a führt. Da zwischen dem Spiegelelektrodenstreifen 41b und der Steuerelektrode 42 kein Spannungsunterschied vorhanden ist, wird der Pegel des flüssigen Dielektrikums 36 nicht beeinflußt und es ergibt sich ein niederer Flüssigkeitspegel 60n.

Bei der phasenmodulierenden Struktur 34' in Fig. 7a ganz rechts ist der Fall gezeigt, bei dem die Steuerspannung $U_0 + \Delta U$ beträgt. Die Verteilung des elektrischen Feldes 58, das hier nicht mehr gezeichnet ist, ist analog zu dem gerade beschriebenen Fall, was sich in den Flüssigkeitspegeln 60n und 60h wiederspiegelt.

Zur Veranschaulichung des Umschaltens der Steuerspannung um den Spannungshub $2\Delta U$ sind die drei benachbarten phasenmodulierenden Strukturen, die gerade beschrieben wurden, in Fig. 7b nochmals dargestellt, wobei die Spannungsverhältnisse bei der linken und bei der rechten phasenmodulierenden Struktur im Vergleich zu Fig. 7a unverändert sind, die Steuerspannung der mittleren phasenmodulierenden Struktur in Fig. 7b jedoch von $U_0 - \Delta U$ auf $U_0 + \Delta U$ umgeschaltet worden ist. Als Reaktion auf das Umschalten der Steuerspannung um den Spannungshub $2\Delta U$ haben sich die Flüssigkeitspegel über der mittleren phasenmodulierenden Struktur entsprechend den neuen Spannungsdifferenzen zwischen der Steuerelektrode 42 und den Spiegelelektrodenstreifen 41a, 41b umgekehrt.

Die Flüssigkeitspegel der anderen phasenmodulierenden Strukturen sind jedoch von dieser Umschaltung im wesentlichen unbeeinflußt. Es wird darauf hingewiesen, daß das Anlegen einer Steuerspannung $U_0$ einen im wesentlichen gleichmäßigen Flüssigkeitspegel in dem entsprechenden Bildelement bewirkt. Dieser Zustand entspricht dem nicht-angesteuerten Zustand, der bei dem ersten Ausführungsbeispiel durch eine Steuerspannung $U_S$ von 0 Volt gekennzeichnet ist. Wird jedoch eine Steuerspannung, die von der Steuerspannung $U_0$ abweicht, an die Steuerelektrode 42 angelegt, so ergibt sich in dem entsprechenden Bildelement ein näherungsweise stufenförmiger Flüssigkeitspegel 60h, 60n, welcher im Vergleich zu dem näherungsweise ebenen Flüssigkeitspegel 60m, 60m zu einer Phasenmodulation des auf die entsprechende phasenmodulierende Struktur 34' einfallenden Lichts 32 führt.

Das Phasenprofil kann über die detaillierte Gestaltung der Elektrodenflächen oder der Elektrodentopographie, beispielsweise mit Spitzen, die den Stiften 50 des ersten Ausführungsbeispiels ähnlich sind, und durch die detaillierte Gestaltung von Oberflächeneigenschaften, beispielsweise der Benetzbarkeit, und der Parameter der Flüssigkeit eingestellt bzw. optimiert werden.

Die Phasenmodulation ist beim zweiten Ausführungsbeispiel der vorliegenden Erfindung zu $U_0 \times U_S/d^2$ proportional. Im Beispiel 2 wird erreicht, daß sich das flüssige Dielektrikum 36 lediglich innerhalb der einzelnen, zu schaltenden Bildelemente bewegt und damit nur von dem bei der Ansteuerung eines Bildelements gewünschten Phasenprofils abhängig ist. Weiterhin wird auf vorteilhafte Weise zusätzlich zur Schwerkraft die Rückstellung der Bildelemente durch die elektrische Kraftwirkung ähnlich zum Ansteuervorgang bewirkt.

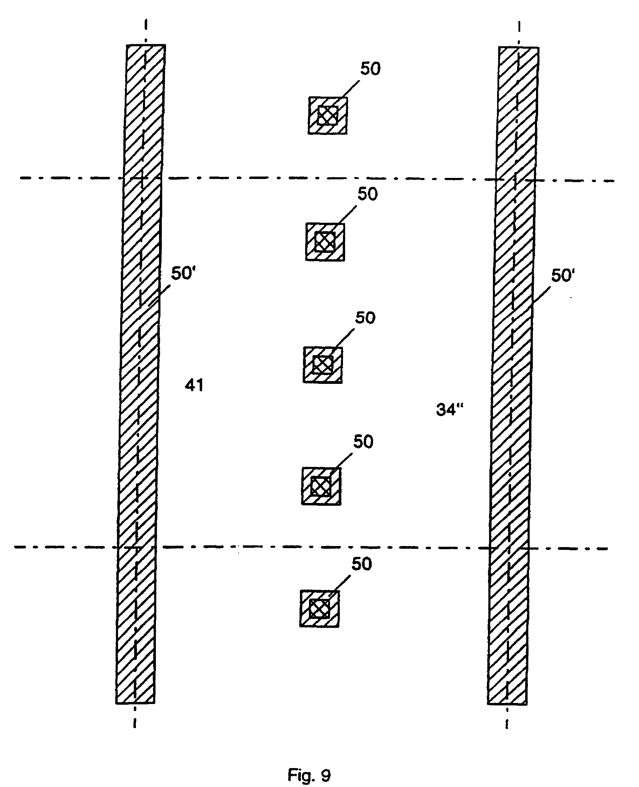

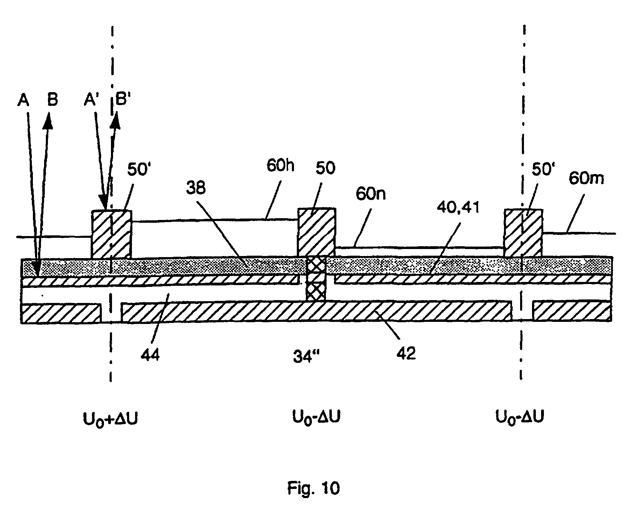

Die Fig. 9 und 10 zeigen ein drittes Ausführungsbeispiel der vorliegenden Erfindung als Draufsicht bzw. im Querschnitt. Wie es in Fig. 9 zu sehen ist, ist das dritte Ausführungsbeispiel in gewisser Weise eine Kombination des ersten Ausführungsbeispiels (Fig. 3) und des zweiten Ausführungsbeispiels (Fig. 5). Entsprechend dem ersten Ausführungsbeispiel sind einzelne Steuerelektroden 42 mit geeignet verbundenen Stiften 50 aus Wolfram vorgesehen, die sich durch Löcher in der Spiegelelektrode 41 und in dem Spiegel 40, der die Oberfläche der Spiegelelektrode 41 bildet, erstrecken. In Abweichung vom ersten Ausführungsbeispiel sind an den in Fig. 1 gestrichelten senkrechten Linien zusätzliche Referenzelektroden 50' durchgehend ausgeführt. Die Referenzelektroden 50' bestehen aus leitfähigen Streifen beispielsweise aus Aluminium oder aus einem anderen geeigneten Materilal, wie es besonders in Fig. 10 zu sehen ist. Ein Pixel 34" ist durch die strichpunktierten Linien in Fig. 9 und Fig. 10 gekennzeichnet. Wie es in Fig. 10 zu sehen ist, ragen die drei Stifte 50 über den maximalen Flüssigkeitspegel 60h hinaus. Ihre Abmessungen sind ferner derart gewählt, daß sie ihr jeweiliges Loch 52 abdecken. Für Fachleute ist es jedoch offensichtlich, daß die Abmessungen und Anzahl der Stifte 50, 50' nicht erfindungswesentlich sind, und daß dieselben auch variiert werden können.

Um eine Variation der Flüssigkeitspegel von einem Pixel 34" zu einem nächsten Pixel 34" zu erreichen, werden ähnlich zu dem zweiten Ausführungsbeispiel benachbarte Referenzelektrodenstreifen 50' mit Spannungen $U_0 + \Delta U$ bzw. $U_0 - \Delta U$ beaufschlagt, wie es in Fig. 10 gezeigt ist. An die Steuerelektroden 42 werden wahlfrei Steuerspannungen $U_S$ angelegt, wobei in Fig. 10 an die Steuerelektrode 42 eine Spannung $U_0 - \Delta U$ angelegt ist, die aufgrund der jeweiligen Spannungen an den Stiften 50' die eingezeichneten Flüssigkeitspegel 60m, 60h, 60n bedingt. Die Spiegelelektroden 40 befinden sich auf einem weiteren festen oder schaltbaren Referenzpotential, das beispielsweise das Massepotential oder das Potential $U_0$ oder ein anderes Potential sein kann, das für die Optimierung der Einstellung der Oberfläche des Dielektrikums 36 vorteilhaft ist.

Das beschriebene dritte Ausführungsbeispiel ist für Lichtmodulatoren geeignet, bei denen ein Anlegen von unterschiedlichen Spannungen an die Spiegelelektroden nicht erwünscht ist, wie es auch beim ersten Ausführungsbeispiel der Fall ist. Dasselbe weist jedoch die in Verbindung mit dem zweiten Ausführungsbeispiel beschriebenen Vorteile einer größeren Flüssigkeitspegelvariation durch die differentielle Ansteuerung sowie der verbesserten Rückstellung der Flüssigkeit bei einer Pixelumschaltung auf. Die dargestellte Pixelstruktur ist daher zum Erreichen guter bis größter Phasenmodulationen bei vorgegebenem Spannungshub geeignet.

Damit die Wirkung aller Eelektroden 50, 50' als parasitäres Phasengitter minimiert wird, kann die Geometrie des Bildelements über die geeignete Einstellung der Schichtdicken des Stiftes 50 bzw. des Streifens 50', des Flüssigkeitspegels im nicht angesteuerten Zustand 60m und des Dielektrikums 38 gewählt werden, derart, daß das Licht bei Einfall und Reflektion an dem Spiegel 40 bzw. an den Metallelektroden 50, 50' im nicht angesteuerten Zustand des Bildelements praktisch dieselbe Phasenverschiebung erfährt. Weiterhin kann der Einfluß parasitärer Phasengitter unterdrückt werden, indem die für die Bilderzeugung gewählte Diffraktionsrichtung anders gewählt wird wie die parasitär bedingte Richtung. Für Fachleute ist es offensichtlich, daß ähnliche Maßnahmen mit ähnlicher Wirkung auch bei den Ausführungsbeispielen 1 und 2 durchgeführt werden können.

Alle Merkmale der Lichtmodulatoren mit Ausnahme der Flüssigkeit können mit gängigen Verfahren der Halbleitertechnik oder neueren bzw. verbesserten Verfahren hergestellt werden. Beim flüssigen Dielektrikum 36 sind u.a. folgende Parameter wichtig: Dichte, optische Transparenz, elektrische Durchschlagsfestigkeit, Dielektrizitätskonstante, Brechungsindex, Temperaturbeständigkeit, Viskosität, Lichtbeständigkeit, Oberflächenspannung und Dampfdruck.

Zum Schutz gegen eine Verschmutzung, eine Beschädigung oder gegen ein Abdampfen der Flüssigkeit können der Flächenlichtmodulator 30 gemäß dem ersten Ausführungsbeispiel und der Streifen-Flächenlichtmodulator 56 gemäß dem zweiten Ausführungsbeispiel dicht verpackt und mit einem optisch transparenten Fenster, wie z.B. einer Quarzplatte, verschlossen werden.

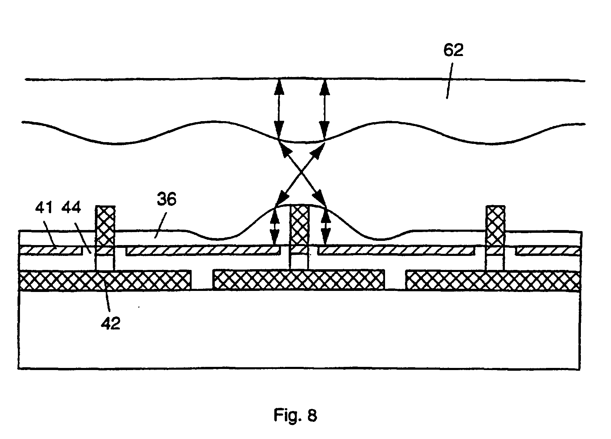

Es kann vorteilhaft sein, zur optischen Korrektur des Phasenprofils beispielsweise im nicht-angesteuerten Zustand ein optisches Korrekturelement 62, wie es in Fig. 8 gezeigt ist, vor den Flächenlichtmodulator 30 bzw. 56 zu schalten, um z.B. unerwünschte Phasenmodulationen zu vermeiden oder die Auswirkungen optisch parasitärer oder inaktiver Gebiete zu reduzieren. Zu diesem Zweck ist es nötig, das geeignete optische Korrekturelement 62, das die notwendige, durch die Bildelementeanordnung bedingte Regelmäßigkeit besitzt, über der Bildelementebene genau zu positionieren. In Fig. 8 ist dargestellt, wie eine linsenartige Vorverformung der Oberfläche des flüssigen Dielektrikums 36, die beispielsweise durch die Kapillarität oder die Oberflächenspannung des flüssigen Dielektrikums 36 vorhanden ist, durch das optische Korrekturelement 62, das beispielsweise eine Korrekturlinse ist, ausgeglichen werden kann. Die Korrekturlinsen könnten beispielsweise mikrotechnisch aus einem Glassubstrat hergestellt und mit der anodischen Bondtechnik aufgebracht werden.

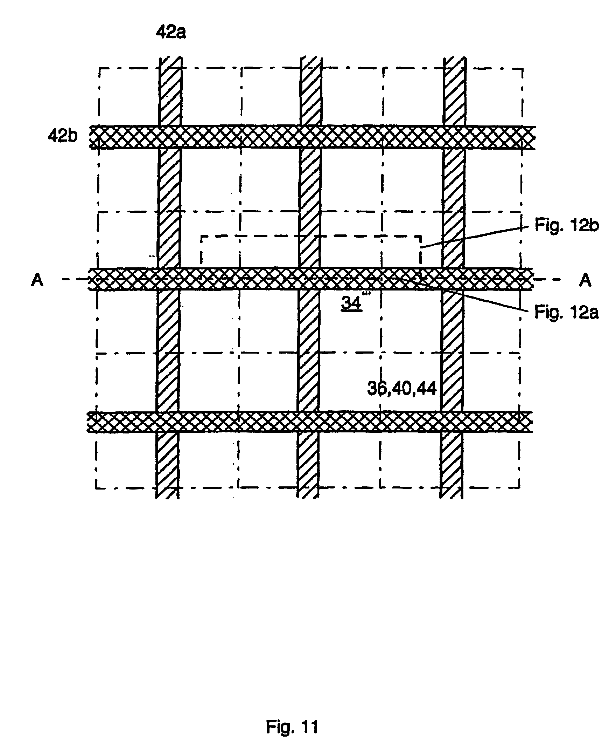

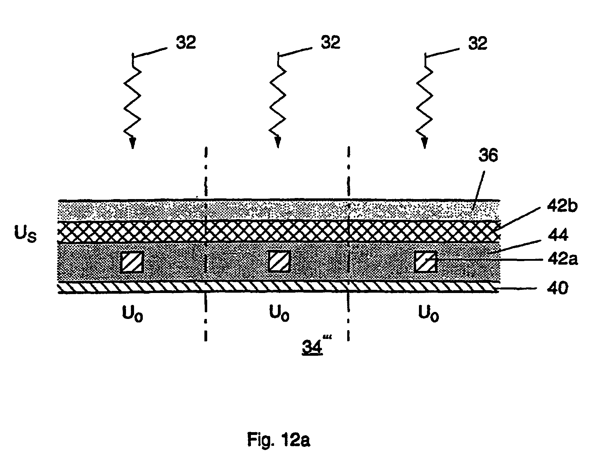

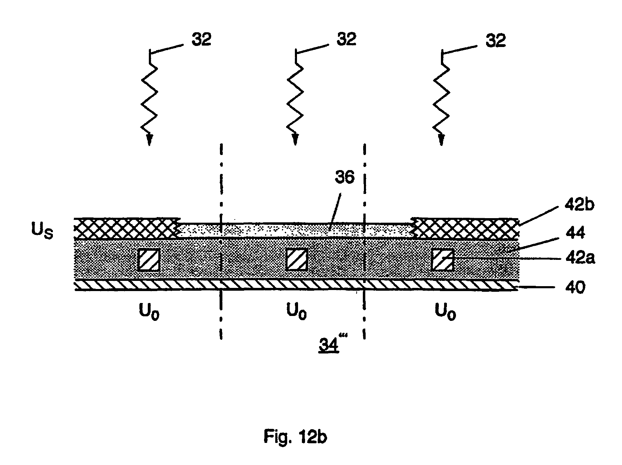

Fig. 11 zeigt ein Array von phasenmodulierenden Strukturen gemäß einem vierten Ausführungsbeispiel der vorliegenden Erfindung. In der Fig. 12a ist ein Querschnitt durch das Array von Fig. 11 entlang der mit Fig. 12a bezeichneten Linie in Fig. 11 gezeigt. Analog dazu zeigt die Fig. 12b einen Querschnitt entlang der in Fig. 11 mit Fig. 12b bezeichneten Linie. Fig. 11 zeigt die beiden Elektroden 42a, 42b in einer streifenförmigen und gegeneinander überkreuzenden Form, d. h. in einem Gittermuster. Die gestrichelten Linien zeigen wieder eine einzige phasenmodulierende Struktur, die einem Pixel entspricht. Bei dem gezeigten Ausführungsbeispiel sind die Elektroden 42a und 42b etwa in der Mitte eines Pixels überkreuzt, wobei in diesem Bereich durch Anlegen unterschiedlicher Potentiale an die beiden Elektroden ein elektrisches Feld in der Nähe des Kreuzungspunktes erzeugt wird. Das in der Nähe des Kreuzungspunktes befindliche Dielektrikum 36 stellt daher den Teilbereich des Dielektrikums dar, in dem die mit einer Spannung beaufschlagbaren Elektroden ein elektrisches Feld erzeugen werden. Das Bezugszeichen 34''' zeigt demnach ein Pixel bzw. eine phasenmodulierende Struktur gemäß dem vierten Ausführungsbeispiel der vorliegenden Erfindung.

Wie es in Fig. 12a gezeigt ist, überdeckt das verformbare und transparente Dielektrikum, das vorzugsweise ein Flüssigdielektrikum ist, die streifenförmige Elektrode 42b, die bei einem bevorzugten Ausführungsbeispiel über der streifenförmigen Elektrode 42a verläuft, die in einem festen Dielektrikum eingebettet ist. Für Fachleute ist es offensichtlich, daß ebenfalls die waagrechte Elektrode 42b in dem Dielektrikum eingebettet sein kann, und entsprechend die senkrechten Elektroden 42a (Fig. 11) von dem Flüssigdielektrikum überdeckt sind. Es ist ebenfalls offensichtlich, daß das Flüssigdielektrikum nicht unbedingt die Elektrode 42b überdecken muß, sondern daß das Flüssigdielektrikum einen geringeren Pegel als die Höhe der Elektroden haben kann. Die gesamte Struktur wird nach unten hin durch den Spiegel 40 begrenzt, an dem das auf die Struktur einfallende Licht reflektiert wird, um wieder durch das feste Dielektrikum 44 und das Flüssigdielektrikum 36 die Struktur zu verlassen. Es ist offensichtlich, daß das feste Dielektrikum 44 durchsichtig sein muß.

Fig. 12b zeigt einen weiteren Querschnitt durch die Struktur von Fig. 11, wobei jedoch aus Übersichtlichkeitsgründen die Elektrode 42b teilweise ausgeschnitten ist, um zu verdeutlichen, wie ein auf die Struktur einfallendes Licht 32 das Flüssigdielektrikum 36 sowie das feste Dielektrikum 44 durchläuft, um an dem Spiegel 40 reflektiert zu werden. In Analogie zu den vorher beschriebenen Figuren sind die an die Elektroden angelegten Spannungen symbolisch dargestellt. So wird an jede Elektrode 42a eine Spannung $U_0$ angelegt, während an jede Elektrode 42b eine Spannung $U_S$ angelegt wird. Die Fig. 12a und 12b zeigen einen Zustand, bei dem die angelegte Spannung $U_S$ Null ist, d. h. die Oberfläche des Flüssigdielektrikums 36 ist eben. Bei einer angelegten Spannung $U_S$ würde sich ein Verlauf der Oberfläche des Flüssigdielektrikums ergeben, der zu Fig. 4 analog ist, d. h. in der Nähe der Kreuzungspunkte der jeweiligen streifenförmigen Elektroden wird ein erhöhter Flüssigkeitspegel vorhanden sein. Alle weiteren in den Fig. 11, 12a und 12b beschriebenen Elemente entsprechen den bereits vorher ausführlich dargelegten Elementen mit den gleichen Bezugszeichen.

Neben dem bereits erwähnten Anwendungsbereich der Flächenlichtmodulatoren gemäß der vorliegenden Erfindung für die Wafer-Direktbelichtung können die Flächenlichtmodulatoren gemäß der vorliegenden Erfindung für eine Vielzahl weiterer Anwendungen, wie z.B. für Projektionsdisplays, für holographische Displays, für programmierbare Linsen, für Gitter, für optische Korrelatoren und Rechner und für Head-up-Displays, eingesetzt werden. Optische Transparenz bezieht sich auf die Transparenz für das verwendete Licht, dessen Wellenlänge nicht nur auf den sichtbaren Bereich begrenzt ist. Je nach Anwendung kann auch Infrarot- oder Ultraviolettlicht verwendet werden.

**Patentansprüche**

1. Struktur für die Phasenmodulation von auf die Struktur einfallendem Licht (32), mit

   einem Spiegel (40);

   einem auf dem Spiegel (40) angeordneten, verformbaren und transparenten Dielektrikum (36); und

   mindestens zwei mit einer Spannung beaufschlagbaren Elektroden (41, 42; 41a, 41b, 42; 50, 50') zum Erzeugen eines elektrischen Feldes (58) in zumindest einem Teilbereich des Dielektrikums (36), wodurch die optische Weglänge des das Dielektrikum (36) durchlaufenden Lichts gegenüber einem nicht mit dem elektrischen Feld beaufschlagten Zustand des Dielektrikums (36) verändert wird,

   wobei das Dielektrikum (36) bezüglich der Elektroden (41, 42; 41a, 41b, 42; 50, 50') derart angeordnet ist, daß das das Dielektrikum (36) durchlaufende Licht zumindest einen Teil des Teilbereichs des Dielektrikums, der mit dem elektrischen Feld beaufschlagbar ist, durchläuft, ohne eine der Elektroden (41, 42; 41a, 41b, 42; 50, 50') zu durchlaufen; und

   wobei das Dielektrikum (36), der Spiegel (40), und die Elektroden (41, 42; 41a, 41b, 42; 50, 50') auf einem Substrat (48) angeordnet sind, das eine CMOS-Aktiv-Matrix aufweist, durch die die Elektroden mit einer Spannung beaufschlagt werden können.

2. Struktur gemäß Anspruch 1,
bei der der Spiegel (40) durch eine Oberfläche einer Elektrode (41; 41a, 41b), auf welche das Licht (32) einfällt, gebildet ist.

3. Struktur gemäß Anspruch 1 oder 2,
bei der das verformbare, transparente Dielektrikum (36) ein flüssiges Dielektrikum ist.

4. Struktur gemäß einem beliebigen der vorhergehenden Ansprüche,
bei der das verformbare, transparente Dielektrikum (36) schichtförmig ist.

5. Struktur gemäß Anspruch 4,
bei der das schichtförmige Dielektrikum (36) parallel zum Spiegel (40) angeordnet ist.

6. Struktur gemäß Anspruch 5,
bei der eine Elektrode (41; 41a, 41b) und der Spiegel (40) ein Loch (52; 52') aufweisen, in dem sich zumindest ein Teil (50; 50') der anderen Elektrode (42) befindet, wobei die Elektroden (41, 42; 41a, 41b, 42) durch das Dielektrikum (36) voneinander elektrisch isoliert sind.

7. Struktur gemäß Anspruch 6,
bei der sich der Teil (50; 50') der anderen Elektrode (42) durch das Loch (52; 52') hindurch über die eine Elektrode (41; 41a; 41b) hinaus und durch das Dielektrikum (36) erstreckt.

8. Struktur gemäß Anspruch 6 oder 7,
bei der zwischen der einen Elektrode (41; 41a, 41b) und der anderen Elektrode (42) ein festes Dielektrikum (44) gebildet ist, das zusammen mit den beiden Elektroden (41, 42; 41a, 41b, 42) eine Pufferkapazität (46) bildet.

9. Struktur gemäß einem der Ansprüche 6 bis 8,
bei der das Loch ein durchgehendes Loch (52') ist, wodurch voneinander isolierte Spiegelelektrodenstreifen (41a, 41b) gebildet sind.

10. Flächenlichtmodulator (30; 56; 30'),
bei dem eine Mehrzahl von gleichen oder verschiedenen Strukturen (34; 34'; 34") gemäß einem der Ansprüchen 1 bis 9 in einem Array angeordnet ist.

11. Flächenlichtmodulator (30; 56; 30') gemäß Anspruch 10,
bei dem eine Mehrzahl von gleichen oder verschiedenen Strukturen (34; 34'; 34") gemäß einem der Ansprüchen 8 bis 11 beliebig auf einer Fläche angeordnet ist.

12. Flächenlichtmodulator (30; 56; 30') gemäß Anspruch 10 oder 11,
bei dem die anderen Elektroden (42) der Mehrzahl von Strukturen (34; 34'; 34") voneinander elektrisch getrennt sind.

13. Flächenlichtmodulator (30) gemäß einem beliebigen der Ansprüche 10 bis 12,
bei dem die einen Elektroden (41) und die Spiegel (40) der Strukturen (34) gemäß einem der Ansprüche 8 bis 10 durchgehend ausgeführt sind.

14. Flächenlichtmodulator (56) gemäß einem beliebigen der Ansprüche 10 bis 12,
bei dem die einen Elektroden (41) und die Spiegel (40) der Mehrzahl der Strukturen (34') gemäß Anspruch 11 lediglich in einer Array-Richtung durchgehend ausgeführt sind und in der anderen Arrayrichtung durch längliche Löcher (52') getrennt sind.

15. Flächenlichtmodulator (56) gemäß Anspruch 13,
bei dem die Spiegelelektrodenstreifen (40a, 40b) abwechselnd mit bezüglich eines Referenzwertes $(U_0)$ symmetrischen Spannungen $(U_0 + \Delta U, U_0 - \Delta U)$ beaufschlagt sind.

16. Flächenlichtmodulator (30') gemäß einem beliebigen der Ansprüche 10 bis 12,
bei dem an mindestens zwei Grenzen eines Pixels (34") durchgehende Elektrodenstreifen (50') ausgeführt sind, wobei benachbarte Elektrodenstreifen (50') mit unterschiedlichen Spannungen beaufschlagt sind.

17. Flächenlichtmodulator (30; 56; 30') gemäß einem beliebigen der Ansprüche 10 bis 16,
bei dem ein transparentes Schutzfenster über der Mehrzahl von Strukturen (34; 34'; 34") angebracht ist.

18. Flächenlichtmodulator (30; 56; 30') gemäß einem der Ansprüche 10 bis 17,
bei dem über der Mehrzahl von Strukturen (34; 34'; 34") ein optisches Korrekturelement (62) vorgesehen ist.

19. Flächenlichtmodulator (30; 56; 30') gemäß einem der Ansprüche 10 bis 18,
bei dem die Dicken der Elektroden (50, 50', 41a, 41b), der Flüssigkeitspegel im nicht ausgesteuerten Zustand (60m) und/oder die Dicke des Dielektrikums (38) derart eingestellt sind, daß die Wirkung parasitärer Strukturen minimiert ist.

20. Flächenlichtmodulator nach Anspruch 10,
bei dem zwei Sätze von jeweils streifenförmigen Elektroden (42a, 42b) in einem Gittermuster angeordnet sind, wobei ein Satz von parallelen Elektroden (42a) durch ein festes Dielektrikum (44) von dem anderen Satz von parallelen Elektroden (42b) elektrisch getrennt ist.

## Claims

1. A structure for the phase modulation of light (32) incident upon said structure, comprising
a mirror (40);
a deformable and transparent dielectric (36) disposed on the mirror (40); and
at least two electrodes (41; 42; 41a, 41b, 42; 50, 50') adapted to have a voltage applied thereto for generating an electric field (58) in at least a partial region of said dielectric (36), thereby changing the optical path length of the light passing through the dielectric (36) with respect to a state of the dielectric (36) in which the electric field is not applied thereto, wherein said dielectric (36) with respect to the electrodes (41, 42; 41a, 41b, 42; 50, 50') is disposed such that the light passing through the dielectric (36) passes at least through part of said partial region of the dielectric adapted to have the electric field applied thereto, before it impinges upon one of the electrodes (41, 42; 41a, 41b, 42; 50, 50'); and wherein said dielectric (36), said mirror (40) and said electrodes (41, 42; 41a, 41b, 42; 50, 50') are arranged on a substrate (48) having a CMOS active matrix through which a voltage can be applied to said electrodes.

2. The structure of claim 1,
wherein the mirror (40) is constituted by a surface of an electrode (41; 41a, 41b) on which the light (32) is incident.

3. The structure of claim 1 or 2,
wherein the deformable, transparent dielectric (36) is a liquid dielectric.

4. The structure of any of the preceding claims,
wherein the deformable, transparent dielectric (36) is of layer-type.

5. The structure of claim 4,
wherein the layer-type dielectric (36) is arranged parallel to the mirror (40).

6. The structure of claim 5,
wherein one electrode (41; 41a, 41b) and the mirror (40) have a hole (52; 52') in which at least part (50; 50') of the other electrode (42) is located, the electrodes (41, 42; 41a, 41b, 42) being electrically isolated from each other by said dielectric (36).

7. The structure of claim 6,
wherein said part (50; 50') of the other electrode (42) extends through the hole (52; 52') beyond said one electrode (41; 41a, 41b) and through said dielectric (36).

8. The structure of claim 6 or 7,
wherein between said one electrode (41; 41a, 41b) and said other electrode (42) there is disposed a solid dielectric (44) which together with the two electrodes (41, 42; 41a, 41b, 42) constitutes a buffer capacitor (46).

9. The structure of any of claims 6 to 8,
wherein said hole is a continuous hole (52') so that mutually isolated mirror electrode strips (41a, 41b) are formed.

10. A spatial light modulator (30; 56; 30'),
wherein a plurality of like or different structures (34; 34'; 34'') according to any of claims 1 to 9 is arranged in an array.

11. The spatial light modulator (30; 56; 30') of claim 10,
wherein a plurality of like or different structures (34; 34'; 34'') according to any of claims 8 to 11 is arranged in arbitrary manner on a surface.

12. The spatial light modulator (30; 56; 30') of claim 10 or 11,
wherein the other electrodes (42) of the plurality of structures (34; 34'; 34'') are electrically isolated from each other.

13. The spatial light modulator (30) of any of claims 10 to 12,
wherein said one electrodes (41) and said mirrors (40) of the structures (34) according to any of claims 8 to 10 are of continuous design.

14. The spatial light modulator (56) of any of claims 10 to 12,
wherein said one electrodes (41) and said mirrors (40) of the plurality of structures (34') according to claim 11 are of continuous design in only one array direction and are separated by elongate holes (52') in the other array direction.

15. The spatial light modulator (56) of claim 13,
wherein the mirror electrode strips (40a, 40b) have voltages ($U_0 + \Delta U$, $U_0 - \Delta U$) applied thereto in alternating manner which are symmetric with respect to a reference value ($U_0$).

16. The spatial light modulator (30') of any of claims 10 to 12,
wherein at at least two boundaries of a pixel (34'') there are formed continuous electrode strips (50'), with adjacent electrode strips (50') having different voltages applied thereto.

**17.** The spatial light modulator (30; 56; 30') of any of claims 10 to 16,
wherein a transparent protective window is provided over the plurality of structures (34; 34'; 34").

**18.** The spatial light modulator (30; 56; 30') of any of claims 10 to 17,
wherein an optical correction member (62) is provided over the plurality of structures (34; 34'; 34'').

**19.** The spatial light modulator (30; 56; 30') of any of claims 10 to 18,
wherein the thicknesses of the electrodes (50, 50', 41a, 41b), the liquid level in the non-addressed state (60m) and/or the thickness of the dielectric (38) are adjusted such that the effect of parasitic structures is minimized.

**20.** The spatial light modulator of claim 10,
wherein two sets of strip-shaped electrodes (42a, 42b) each are arranged in a grid pattern, with one set of parallel electrodes (42a) being electrically isolated from the other set of parallel electrodes (42b) through a solid dielectric (44).

## Revendications

**1.** Structure de modulation en phase de lumière incidente (32) sur la structure, avec
un miroir (40) ;
un diélecrique (36) déformable et transparent disposé sur le miroir (40) ; et
au moins deux électrodes (41, 42 ; 41a, 41b ; 50, 50') pouvant être soumises à une tension, destinées à générer un champ électrique (58) dans au moins une zone partielle du diélectrique (36) par lequel la longueur du trajet de la lumière traversant le diélectrique (36) est modifiée par rapport à un état du diélectrique (36) non soumis au champ électrique,
le diélectrique (36) étant disposé par rapport aux électrodes (41, 42 ; 41a, 41b ; 50, 50') de telle sorte que la lumière traversant le diélectrique (36) traverse au moins une partie de la zone partielle du diélectrique pouvant être soumise au champ électrique, sans traverser l'une des électrodes (41, 42 ; 41a, 41b ; 50, 50') ; et
le diélectrique (36), le miroir (40) et les électrodes (41, 42 ; 41a, 41b ; 50, 50') étant disposés sur un substrat (48) présentant une matrice active CMOS par laquelle les électrodes peuvent être soumises à une tension.

**2.** Structure selon la revendication 1, dans laquelle le miroir (40) est constitué par une surface d'une électrode (41 ; 41a, 41b) sur laquelle la lumière est incidente.

**3.** Structure selon la revendication 1 ou 2, dans laquelle le diélectrique (36) déformable et transparent est un diélectrique liquide.

**4.** Structure selon l'une quelconque des revendications précédentes, dans laquelle le diélectrique (36) déformable et transparent est en forme de couche.

**5.** Structure selon la revendication 4, dans laquelle le diélectrique (36) en forme de couche est disposé parallèle au miroir (40).

**6.** Structure selon la revendication 5, dans laquelle l'une des électrodes (41 ; 41a, 41b) et le miroir (40) présentent un trou (52 ; 52') dans lequel se situe au moins une partie (50 ; 50') de l'autre électrode (42), les électrodes (41, 42 ; 41a, 41b, 42) étant isolées électriquement l'une de l'autre par le diélectrique (36).

**7.** Structure selon la revendication 6, dans laquelle la partie (50 ; 50') de l'autre électrode (42) s'étend à travers le trou (52 ; 52'), au-delà de l'une des électrodes (41 ; 41a ; 41b), et à travers le diélectrique (36).

**8.** Structure selon la revendication 6 ou 7, dans laquelle il est formé, entre l'une des électrodes (41; 41a; 41b) et l'autre électrode (42), un diélectrique solide (44) formant, ensemble avec les deux électrodes (41, 42 ; 41a, 41b, 42), une capacité-tampon (46).

**9.** Structure selon l'une des revendications 6 à 8, dans laquelle le trou est un trou traversant (52') par lequel il est formé des bandes d'électrode à miroir (41a, 41b) isolées l'une de l'autre.

**10.** Modulateur de lumière en surface (30 ; 56 ; 30'), dans lequel une pluralité de structures (34 ; 34' ; 34"), identiques ou différentes, selon l'une des revendications 1 à 9 sont disposées selon une rangée.

**11.** Modulateur de lumière en surface (30 ; 56 ; 30') selon la revendication 10, dans lequel une pluralité de structures (34 ; 34' ; 34"), identiques ou différentes, selon l'une des revendications 8 à 11 sont disposées de manière à volonté sur une surface.

**12.** Modulateur de lumière en surface (30 ; 56 ; 30') selon la revendication 10 ou 11, dans lequel les autres électrodes (42) de la pluralité de structures (34; 34' ; 34") sont séparées électriquement l'une de l'autre.

**13.** Modulateur de lumière en surface (30) selon l'une quelconque des revendications 10 à 12, dans lequel les unes électrodes (41) et les miroirs (40) des structures (34) sont réalisés en continu selon l'une des revendications 8 à 10.

**14.** Modulateur de lumière en surface (56) selon l'une quelconque des revendications 10 à 12, dans lequel les unes électrodes (41) et les miroirs (40) de la pluralité des structures (34) sont réalisés en continu, selon la revendication 11, uniquement dans le sens d'une rangée, et sont séparées, dans le sens de l'autre rangée, par des trous oblongs (52').

**15.** Modulateur de lumière en surface (56) selon la revendication 13, dans lequel les bandes d'électrode à miroir (40a, 40b) sont soumises alternativement à des tensions ($U_0 + \Delta U$, $U_0 - \Delta U$) symétriques par rapport à une valeur de référence ($U_0$).

**16.** Modulateur de lumière en surface (30') selon l'une quelconque des revendications 10 à 12, dans lequel à au moins deux limites d'un pixel (34") sont réalisées des bandes d'électrode continues (50'), des bandes d'électrode (50') adjacentes étant soumises à des tensions différentes.

**17.** Modulateur de lumière en surface (30 ; 56 ; 30') selon l'une quelconque des revendications 10 à 16, dans lequel une fenêtre de protection transparente est placée au-dessus de la pluralité de structures (34 ; 34' ; 34").

**18.** Modulateur de lumière en surface (30 ; 56 ; 30') selon l'une quelconque des revendications 10 à 17, dans lequel un élément de correction optique (62) est prévu au-dessus de la pluralité de structures (34 ; 34' ; 34").

**19.** Modulateur de lumière en surface (30 ; 56 ; 30') selon l'une quelconque des revendications 10 à 18, dans lequel les épaisseurs des électrodes (50, 50', 41a, 41b), le niveau de liquide à l'état non dirigé (60m) et/ou l'épaisseur du diélectrique (38) sont réglés de telle sorte que l'effet de structures paraisitaires soit minimisé.

**20.** Modulateur de lumière en surface selon la revendication 10, dans lequel deux jeux de chacune des électrodes en forme de bande (42a, 42b) sont disposés en forme de grille, un jeu d'électrodes parallèles (42a) étant séparé électriquement de l'autre jeu d'électrodes parallèles (42b) par un diélectrique solide (44).

U = 0

10

12

14

Fig. 1a

U = U$_S$

d

10

12

Δh

14

Fig. 1b

Fig. 2

Fig. 3

Fig. 4

Fig. 5

$U_0 - \Delta U$        $U_0 + \Delta U$    41a   50     $U_0 - \Delta U$   41b    41a     $U_0 + \Delta U$

$U_S$          42    $U_S$     34'     $U_S$

Fig. 6

Fig. 7a

Fig. 7b

Fig. 8

Fig. 9

Fig. 10

Fig. 11

32    32    32

36

42b

$U_S$

44

42a

40

$U_0$    $U_0$    $U_0$

$34^{'''}$

Fig. 12a

**Fig. 12b**